# EUROPEAN PATENT APPLICATION

(11) **EP 1 834 829 A2**
(43) Date of publication of application: **19.09.2007**
(21) Application number: 07005510.8
(22) Date of filing: 16.03.2007
(51) Int. Cl.: B60L 3/04

(54) **Power supply device for electric vehicle**

(30) Priority: 17.03.2006 JP 2006075500
(71) Applicant: YAMAHA HATSUDOKI KABUSHIKI KAISHA, Iwata-shi, Shizuoka-ken 438-8501 (JP)
(72) Inventor: Matsumoto, Takaie, Iwata-shi, Shizuoka-ken 438-8501 (JP); Hosoi, Yukiharu Yamaha Hatsudoki Kabushiki Kaisha, Shizuoka-ken 438-8501 (JP); Suzuki, Shigeto Yamaha Hatsudoki Kabushiki Kaisha, Shizuoka-ken 438-8501 (JP); Ikeda, Takeshi Yamaha Hatsudoki Kabushiki Kaisha, Shizuoka-ken 438-8501 (JP); Fukudome, Toshinori Yamaha Hatsudoki Kabushiki Kaisha, Shizuoka-ken 438-8501 (JP)
(74) Representative: Grünecker, Kinkeldey, Stockmair & Schwanhäusser Anwaltssozietät

(57) **Abstract**

The present invention relates to a power supply device for an electric vehicle comprising at least two batteries and/or battery modules, and comprising a safety plug device having a safety plug unit connecting base and a safety plug unit, wherein each battery and/or battery module is individually electrically connected to the safety plug unit connecting base, and wherein the batteries and/or battery modules are connected to each other in series by coupling the safety plug unit to the safety plug unit connecting base to output a series voltage of the batteries and/or battery modules.

## Description

This invention relates to a power supply device, in particular to a high voltage power supply device used for an electric vehicle such as, for example, a hybrid vehicle and an electric automobile which obtain drive power from an electric motor to run.

Conventionally, as one of measures for preserving the global environment, electric automobiles that run with an electric motor being driven by electric power of batteries, hybrid vehicles that run with a combination of a gasoline engine and an electric motor, and so forth are under development. In those electric vehicles, a power supply battery device is required to supply high voltage for operating an electric motor so as to efficiently generate high output.

Regarding a vehicle having a high voltage power supply battery device, a technique to place a safety plug unit that mechanically opens a high voltage circuit for the safety of inspection and maintenance service is known.

For example, in Patent Document 1, a removable safety plug is placed in the middle of a circuit connecting multiple batteries to each other in series. When the safety plug is removed from a battery containing box, the battery series circuit is mechanically disconnected.

This Patent Document 1 discloses a power supply device in which twelve batteries each having 24V are connected to each other in series to generate voltage of 288V. A safety plug is placed in the middle of the series connection, i.e., at a connecting portion between the sixth battery and the seventh battery (a first embodiment). Also, a second embodiment suggests a structure in which plug electrodes are placed at three portions in the middle of a battery series circuit having 12 batteries, i.e., a safety plug structure in which plug electrodes are placed every three batteries.

Patent Document 1: JP-A-2004-7919

However, the structure of Patent Document 1 lacks safety. That is, even though the safety plug is removed from the battery containing box to disconnect the battery series circuit, voltage of 144V (288/2) is still applied to an electrode section of the battery containing box into which the safety plug is inserted. Also, in the second embodiment, voltage of 72V (288/4) is applied to the electrode section. In general, resistance of a human body can be 3-5Kₒ, and a current amount that affects the human body can be 10mA.

Accordingly, voltage of 50V (0.01A x 5000ₒ) can be a criterion as safety voltage for human beings. Therefore, a further reduction of the voltage is required in the structure of Patent Document 1.

Because the plug electrodes are inserted every three batteries of a battery line which is arranged in line in the second embodiment that has multiple safety plugs, intervals between three plug electrodes are inevitably large. If, therefore, the three plug electrodes need to be inserted simultaneously, the safety plug itself should be extremely upsized.

The present invention is made to solve the problems discussed above and objects thereof are to improve safety of a power supply device having a safety plug and also to downsize the safety plug.

This objective is solved by a power supply device for an electric vehicle comprising at least two batteries and/or battery modules, and comprising a safety plug device having a safety plug unit connecting base and a safety plug unit, wherein each battery and/or battery module is individually electrically connected to the safety plug unit connecting base, and wherein the batteries and/or battery modules are connected to each other in series by coupling the safety plug unit to the safety plug unit connecting base to output a series voltage of the batteries and/or battery modules.

According to a preferred embodiment, the power supply device further comprises a plurality of batteries and/or battery modules, and a battery containing box for containing the plurality of batteries and/or battery modules.

Preferably, the safety plug unit connecting base comprises a plurality of plug connective plus electrodes each electrically connected to a plus terminal of the respective battery or battery module through a wiring and a plurality of plug connective minus electrodes each electrically connected to a minus terminal of the respective battery or battery module through a wiring, the plug connective plus electrodes and the plug connective minus electrodes being disposed out of the battery containing box.

Further, preferably the safety plug unit comprises coupling electrodes that are removably coupled with the safety plug unit connecting base and wherein, while being coupled therewith, electrically connecting the plug connective plus electrodes and the plug connective minus electrodes, such that by coupling the safety plug unit with the safety plug unit connecting base, the respective batteries and/or battery modules are connected to each other in series to output a series voltage from a power supply output section.

Still further, preferably the plug connective plus electrodes and the plug connective minus electrodes are disposed in such a manner that all of the plus terminals and all of the minus terminals which function as series connective terminals between the batteries and/or battery modules are connected to each other through wirings.

Preferably, the safety plug unit cuts off all of the series connections between the batteries and/or battery modules when the safety plug unit is removed from the safety plug unit connecting base.

Further, preferably the safety plug unit connecting base is a base in which the plug connective plus electrodes and the plug connective minus electrodes are collectively positioned in a limited area and are arranged generally at equal intervals in a plane.

Still further, preferably each one of the batteries and/or battery modules contains a plurality of cells connected to each other in series as a package, and an output voltage therefrom is greater than 12V and less than 50V.

According to another preferred embodiment, the power supply device further comprises switching means disposed in a power supply line for selectively opening and closing the power supply circuit; removal preventing means for mechanically preventing the safety plug unit from being removed from the safety plug unit connecting base; and switch operating means for keeping the switching means under an open condition thereof when the removal preventing means releases the safety plug unit.

Preferably, the removal preventing means includes a cover for selectively moving between an open position and a close position to cover the safety plug unit in the close position, and the switch operating means operates in response to the open/close position conditions of the cover, and keeps the switching means under an open condition when the cover is under the open position condition.

According to yet another preferred embodiment, the power supply device further comprises a breaker disposed in a power supply circuit for protecting the power supply circuit from an excessive current.

Preferably, a fuse is disposed in the safety plug unit to be connected to the series circuit of the battery in series.

Further, preferably the fuse is positioned on a reverse side of the safety plug unit, and the fuse is not allowed to be exchanged under a condition that the safety plug unit is coupled with the plug unit connecting base.

Still further, preferably the power supply device is disposed above a rear wheel of a hybrid type motorcycle to function as the power supply device for the motorcycle that runs with power generated by a combination of an internal combustion engine and an electric motor.

In the following, the present invention is explained in greater detail with respect to several embodiments thereof in conjunction with the accompanying drawings, wherein:
- FIG. 1: is a side elevational view showing a hybrid type motorcycle that has a power supply unit configured in accordance with one embodiment,
- FIG. 2: is a system block diagram of the power supply device as the embodiment,
- FIG. 3: is a plan perspective view of the power supply device as the embodiment,
- FIG. 4: is a side elevational view of the power supply device as the embodiment,
- FIG. 5: is a plan view showing a top surface of a safety plug unit connecting base,
- FIG. 6: is a bottom plan view showing a bottom surface of a safety plug unit connecting base,
- FIG. 7: is a vertical, cross sectional, side elevational view taken along the line A-A of FIG. 5,
- FIG. 8: is a vertical, cross sectional, front elevational view taken along the line B-B of FIG. 5,
- FIG. 9: is a plan view showing a top surface of a safety plug unit,
- FIG. 10: is a bottom plan view showing a bottom surface of a safety plug unit,
- FIG. 11: is a vertical, cross sectional, side elevational view for explaining the major part under a condition that male electrode bodies are attached,
- FIG. 12: is a cross sectional, front elevational view taken along the line C-C of FIG. 9,
- FIG. 13: is a vertical cross sectional view for explaining a joining condition of female electrode bodies and the male electrode bodies with each other in the safety plug device,
- FIG. 14: is a plan view showing a top surface of a power supply output base,
- FIG. 15: is a bottom plan view showing a bottom surface of a power supply output base,
- FIG. 16: is a cross sectional, front elevational view taken along the line D-D of FIG. 14. FIG. 17 is a vertical cross sectional, front elevational view of a power supply output coupler,
- FIG. 18: is a vertical cross sectional view for explaining a joining condition of the female electrode bodies and the male electrode bodies with each other in the power supply output coupler, and
- FIG. 19: is a block diagram for explaining wiring connections of the safety plug device,

### Description of Reference Numerals:

1: power supply device
10: hybrid type motorcycle
20: battery containing case
21: safety plug unit open/close cover
30: breaker
40: safety plug unit connecting base
50: safety plug device
60: safety plug unit
80: power supply output base
90: power supply output coupler
100: power supply coupler device
110: signal input base
115: signal input coupler
120: signal coupler device
130: micro-switch
140: relay
4T1, 4T2, 4T3, 4T4, 4T5, 4T6, 4T7, 4T8, 4T9, 4T10, 4T11, 4T12, 4T13, 4T14: female electrode body
6T1, 6T2, 6T3, 6T4, 6T5, 6T6, 6T7, 6T8, 6T9, 6T10, 6T11, 6T12, 6T13, 6T14: male electrode body
JW1, JW2, JW3, JW4, JW5, JW6, JW7, JW8, JW9: jumper wiring
B1, B2, B3, B4, B5, B6: battery module
W: wiring cable

Hereunder, a power supply device for an electric vehicle as one embodiment will be described with reference to drawings. The embodiment is applied to an electric power supply device of a hybrid type motorcycle.

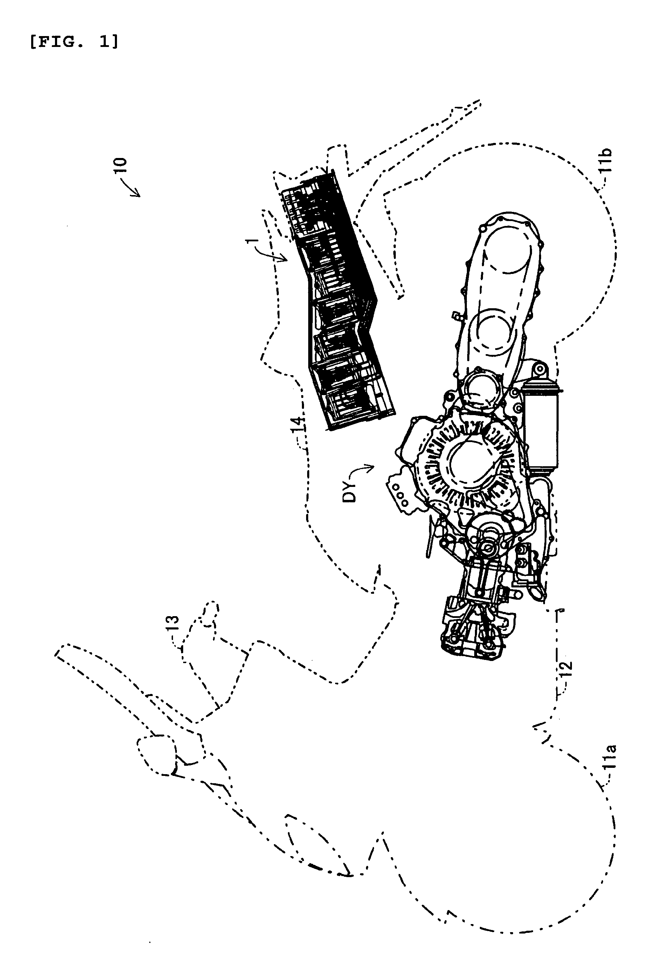

FIG. 1 shows a hybrid type motorcycle 10 of the embodiment. This hybrid type motorcycle has a front wheel 11a and a rear wheel 11b. A drive unit DY is disposed in a center lower portion of a vehicle body 12 defined between the front wheel 11a and the rear wheel 11b. A power supply device 1 is disposed above the rear wheel 11b and in a rear portion of the vehicle body 12. Handlebars 13 having an acceleration grip and a brake (not shown) is disposed in a front upper portion of the vehicle body 12. A seat 14 extends from a center upper portion to a rear upper portion of the vehicle body 12.

The drive unit DY has an engine, a power distribution device, a generator and an electric motor (those are not shown). The hybrid type motorcycle 10 is constructed in such a manner that the engine and the electric motor both of which are power sources are individually operated or are operated in combination to drive the rear wheel 11b which is a drive wheel.

The power supply device 1 is an electric power supply source for supplying electric power to the electric motor. Electric power generated by the generator can be charged into the power supply device 1 when a battery capacity is insufficient.

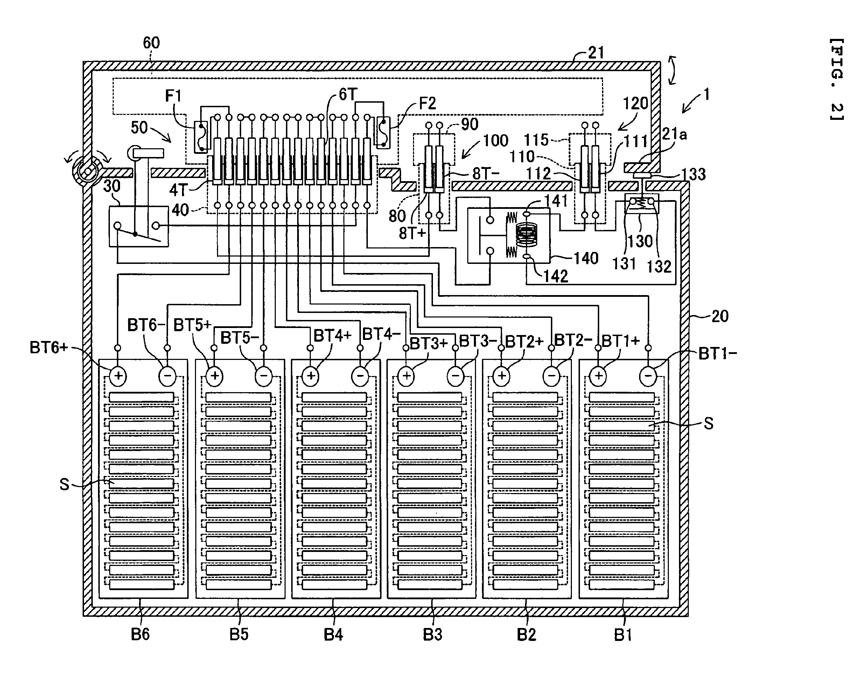

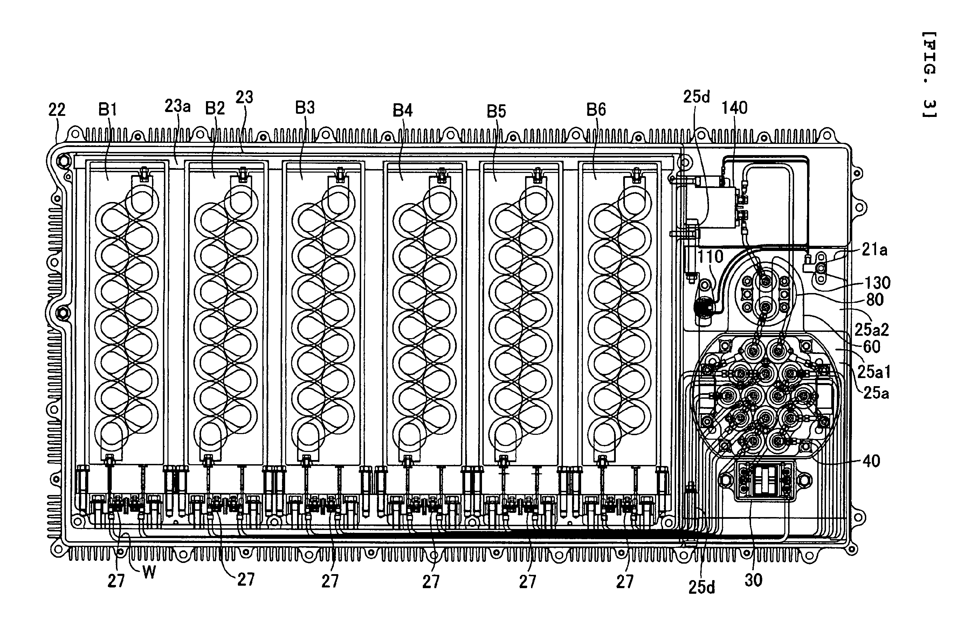

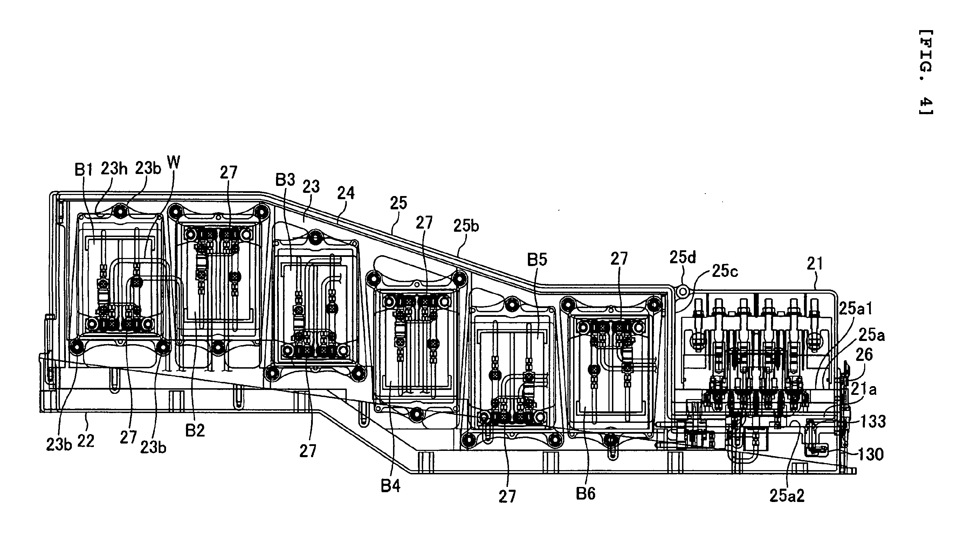

FIG. 2 is a system block diagram of the power supply device 1. FIG. 3 is a plan perspective view of the power supply device 1. FIG. 4 is a side perspective view of the power supply device 1.

First, an electrical circuit structure of the power supply device will be described with reference to FIG. 2.

This power supply device 1 includes six battery modules B1, B2, B3, B4, B5, B6 in a battery containing box 20. Each battery module B1, B2, B3, B4, B5, B6 has fourteen lithium battery cells S (single cell voltage = 3.4V) connected to each other in series and contained in a package (packaged) and each output voltage is set to be 48V. Hereunder, the battery modules B1, B2, B3, B4, B5, B6 will be simply called "battery module B" except for an occasion such that specific one needs to be identified. Additionally, this battery module B corresponds to the battery of the present teaching.

The battery containing box 20 has, other than the six battery modules B, a breaker 30 (protective device against excessive current), a safety plug unit connecting base 40, a power supply output base 80, a signal input base 110, a relay 140 and a micro-switch 130.

A safety plug unit 60 is removably coupled with the safety plug unit connecting base 40 from a location above the base 40 to configure an electric power supply circuit in which the six battery modules B are connected to each other in series when the safety plug unit 60 is coupled. Hereunder, the term "safety plug device 50" will be used to cover both of the safety plug unit connecting base 40 and the safety plug unit 60.

The power supply output base 80 is a power supply output section that supplies the series battery power to the vehicle loads (electric motor). A power supply output coupler 90 is removably coupled with the power supply output base 80. Hereunder, the term "power supply coupler device 100" will be used to cover both of the power supply output base 80 and the power supply output coupler 90.

Additionally, the power supply output base 80 not only acts as the output section of the battery power source but also acts as an input section through which the power generated by the generator (not shown) is inputted.

The signal input base 110 is an input section through which the ON signal of an ignition key (not shown) of the vehicle is inputted. A signal input coupler 115 is removably coupled with the signal input base 110. Hereunder, the term "signal coupler device 120" will be used to cover both of the signal input base 110 and the signal input coupler 115.

A safety plug unit open/close cover 21 attached to the battery containing box 20 for movement between an open position and a close position covers the breaker 30, the safety plug device 50, the power supply coupler device 100 and the signal coupler device 120.

The micro-switch 130 has contact points which are connected under a condition that the safety plug unit open/close cover 21 is in the fully closed position and disconnected under another condition that the safety plug unit open/close cover 21 is in the open position.

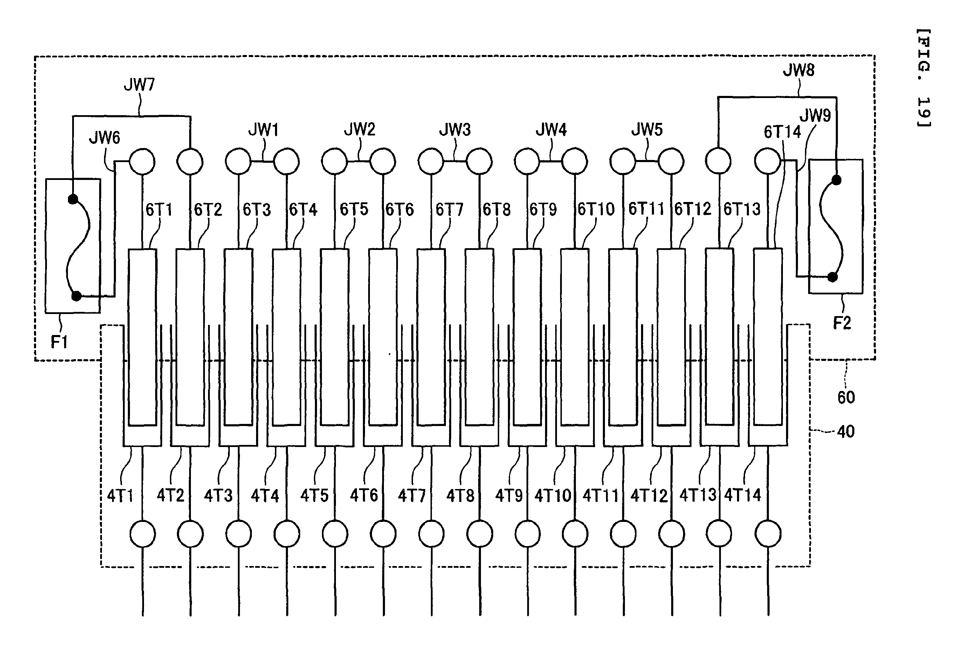

As shown in FIG. 19, the safety plug unit connecting base 40 has fourteen female electrode bodies 4T1, 4T2, 4T3, 4T4, 4T5, 4T6, 4T7, 4T8, 4T9, 4T10, 4T11, 4T12, 4T13, 4T14. FIG. 19 indicates individual electrodes of the safety plug device 50 of FIG. 2 with electrode numbers. A lining order of the electrodes in the circuit is the same as that of FIG. 2.

Additionally, if the fourteen female electrode bodies 4T1, 4T2, 4T3, 4T4, 4T5, 4T6, 4T7, 4T8, 4T9, 4T10, 4T11, 4T12, 4T13, 4T14 do not need to be individually identified, they are simply called "female electrode body 4T."

The female electrode body 4T1 of the safety plug unit connecting base is connected to a plus female electrode body 8T+ of the power supply output base 80. The female electrode body 4T2 is connected to a plus power supply terminal BT6+ of the sixth battery module B6. The female electrode body 4T3 is connected to a minus power supply terminal BT6- of the sixth battery module B6. The female electrode body 4T4 is connected to a plus power supply terminal BT5+ of the fifth battery module B5. The female electrode body 4T5 is connected to a minus power supply terminal BT5- of the fifth battery module B5. The female electrode body 4T6 is connected to a plus power supply terminal BT4+ of the fourth battery module B4. The female electrode body 4T7 is connected to a minus power supply terminal BT4- of the fourth battery module B4. The female electrode body 4T8 is connected to a plus power supply terminal BT3+ of the third battery module B3. The female electrode body 4T9 is connected to a minus power supply terminal BT3- of the third battery module B3. The female electrode body 4T10 is connected to a plus power supply terminal BT2+ of the second battery module B2. The female electrode body 4T11 is connected to a minus power supply terminal BT2- of the second battery module B2. The female electrode body 4T12 is connected to a plus power supply terminal BT1+ of the first battery module B1.

The female electrode body 4T13 is connected to a minus power supply terminal BT1- of the first battery module B1 through the breaker 30. The female electrode body 4T14 is connected to a minus female electrode body 8T- of the power supply output base 80 through the relay 140.

Additionally, the female electrode bodies 4T2, 4T4, 4T6, 4T8, 4T10, 4T12 correspond to the plug connective plus electrodes of the present invention. Also, the female electrode bodies 4T3, 4T5, 4T7, 4T9, 4T11, 4T13 correspond to the plug connective minus electrodes of the present teaching.

The power supply output base 80 has a plus female electrode body 8T+ and a minus female electrode body 8T-. As discussed above, the plus female electrode body 8T+ is connected to the female electrode body 4T1 of the safety plug unit connecting base 40, while the minus female electrode body 8T- is connected to the female electrode body 4T14 of the safety plug unit connecting base 40 through the relay 140.

Additionally, all of those connections are made using wiring cables W which are applied for power supply.

The signal input base 110 has two female input terminals 111, 112. One female input terminal 111 is connected to one terminal 131 of the micro-switch 130, while the other input terminal 112 is connected to a signal line terminal 141 of the relay 140. The other terminal 132 of the micro-switch 130 is connected to the other signal line terminal 142 of the relay 140. Accordingly, the ON signal of the ignition key is inputted through the signal input coupler 115. In addition, when the micro-switch 130 is in the ON state, the contacts of the relay 140 are connected to each other.

As shown in FIG. 19, the safety plug unit 60 coupled with the safety plug unit connecting base 40 has male electrode bodies 6T1, 6T2, 6T3, 6T4, 6T5, 6T6, 6T7, 6T8, 6T9, 6T10, 6T11, 6T12, 6T13, 6T14 corresponding to the female electrode bodies 4T1, 4T2, 4T3, 4T4, 4T5, 4T6, 4T7, 4T8, 4T9, 4T10, 4T11, 4T12, 4T13, 4T14 of the safety plug unit connecting base 40 and fitting into them.

Additionally, if the fourteen male electrode bodies 6T1, 6T2, 6T3, 6T4, 6T5, 6T6, 6T7, 6T8, 6T9, 6T10, 6T11, 6T12, 6T13, 6T14 do not need to be individually identified, they are simply called "female electrode body 6T."

The male electrode body 6T1 and the male electrode body 6T2 of the safety plug unit 60 are connected to each other through jumper wirings JW6, JW7 via a fuse F1. Also, the male electrode body 6T3 and the male electrode body 6T4 are connected to each other through a jumper wiring JW1. The male electrode body 6T5 and the male electrode body 6T6 are connected to each other through a jumper wiring JW2. The male electrode body 6T7 and the male electrode body 6T8 are connected to each other through a jumper wiring JW3. The male electrode body 6T9 and the male electrode body 6T10 are connected to each other through a jumper wiring JW4. The male electrode body 6T11 and the male electrode body 6T12 are connected to each other through a jumper wiring JW5. The male electrode body 6T13 and the male electrode body 6T14 are connected to each other through jumper wirings JW8, JW9 via a fuse F2.

In this power supply device 1 constructing the power supply circuit as discussed above, when the safety plug unit 60 is coupled with the safety plug unit connecting base 40, a series circuit having six battery modules B is constructed, and series voltage thereof can be outputted through the power supply output base 80. Also, when the safety plug unit 60 is removed from the safety plug unit connecting base 40, all of the connections between the respective battery modules B are cut off. Accordingly, the voltage of 48V which generally equals to the output voltage of a single battery module B is applied to the female electrode bodies 4T of the safety plug unit connecting base 40 even at the maximum. Even if, therefore, a human being touches the female electrode bodies 4T, safety is assured.

In the meantime, under a condition such that the safety plug unit 60 is coupled with the safety plug unit connecting base 40 and the series voltage power of the battery modules B is supplied to the vehicle loads, damages of equipment and wirings by large surge voltage, erroneous operations of the equipment made by generation of large noises, or the like can be invited when the safety plug unit 60 is removed. Thus, when the safety plug unit 60 is removed, the electric power is necessarily intercepted from being supplied to the power supply output base 80.

Therefore, in this embodiment, the micro-switch 130 detects the condition that the safety plug unit open/close cover 21 that can cover the safety plug unit 60 in the location thereabove is under the open condition, to make the relay 140 be OFF. On this occasion, the power supply circuit is disconnected from the vehicle loads. Thus, no troubles caused by the surge voltage or by the generation of noises are invited even though the safety plug unit 60 is removed. That is, because the coupling and decoupling actions of the safety plug unit 60 is inevitably accompanied with the movement such that the safety plug unit open/close cover 21 is opened, the open condition of the safety plug unit open/close cover 21 is detected to surely disconnect the power supply circuit before the coupling or decoupling action is made. Accordingly, the safety is extremely improved.

Additionally, the relay 140 corresponds to the switching means of the present invention. The safety plug unit open/close cover 21 corresponds to the removal preventing means of the present invention. The micro-switch 130 corresponds to the switch operating means of the present teaching.

Next, a structure of the power supply device 1 of this embodiment will be described.

As shown in FIGs. 3 and 4, the power supply device 1 includes the six battery modules B1, B2, B3, B4, B5, B6 inside of the battery containing box 20. The battery containing box 20 includes a lower battery box 22 forming a plate-like bottom section, a battery module assembly case 23 positioned above the lower battery box 22 to be a frame for fixing the battery modules B in line, a battery module assembly cover 24 for covering a top surface of the battery module assembly case 23 under a condition that the battery modules B are fixed, and an upper battery box 25 covering a top of the battery module assembly cover 24 and extending to a rear side of the vehicle (right side in FIGs. 3 and 4) to form a placing surface for wiring parts of the safety plug unit connecting base 40, the breaker 30, the power supply output base 80, the signal input base 110, etc.

The battery module assembly case 23 has, in a left side surface thereof (surface located on the left side relative to the advancing direction of the vehicle), generally rectangular openings 23h through which power supply terminal forming surfaces of the respective battery modules B are exposed. Each battery module B is fastened at three circumferential portions around the respective opening by bolts 23b. Also, in a right side surface (surface located on the right side relative to the advancing direction of the vehicle) of the battery module assembly case 23, a positioning member 23a is disposed to position the respective battery modules B at certain intervals. Accordingly, each battery module B is fixed to the battery module assembly case 23 by the three bolts 23b in the left side surface and by the positioning member 23a in the right side surface.

Receptacles 27 are attached to the battery module assembly case 23 to connect power supply terminals of the respective battery modules B and wiring cables W (each mid portion thereof is omitted in FIG. 4) to each other. When the battery modules B are placed at preset positions of the battery module assembly case 23, electrodes of the respective battery modules B and electrodes of the respective receptacles 27 contact with each other to be electrically connected.

Under a condition such that the battery modules B are placed within the battery module assembly case 23, the battery module assembly cover 24 is mounted above the battery modules B to cover the top surfaces of the battery modules B.

The upper battery box 25 further covers the top surface of the battery module assembly cover 24 which is mounted to the battery module assembly case 23.

The upper battery box 25 is a box with no bottom and includes a battery side box 25b covering the battery module assembly case 23 and a wiring equipment side box 25a extending rearward of the vehicle from the battery side box 25b unitarily therewith and having a lower top surface. The upper battery box 25 is fixed to the lower battery box 22.

The wiring equipment side box 25a which is a rear side portion of the upper battery box 25 has top surfaces which have different heights to form two steps. The top surfaces define a plug attaching surface 25a1 to which the safety plug unit connecting base 40 and the breaker 30 are attached, and also define an input and output base attaching surface 25a2 which is positioned lower than the plug attaching surface 25a1 and to which the power supply output base 80 and the signal input base 110 are attached.

In addition, the upper battery box 25 has a hinge section 25d formed on a vertical wall surface 25c which defines a boundary between the battery side box 25b and the wiring equipment side box 25a. The safety plug unit open/close cover 21, which selectively covers and uncovers the safety plug unit 60 and so forth, is journaled by the hinge section 25d.

A vertically extending cross section of the safety plug unit open/close cover 21 is shaped as the letter "L," and a tip end thereof has a manipulative piece 21a bent inside to form an L-shape in cross section to push an operative piece 133 of the micro-switch 130.

The safety plug unit open/close cover 21 has a lock mechanism 26 positioned outside of a surface of its rear portion (rear portion relative to the advancing direction of the vehicle) and between the cover 21 and a rear surface of the wiring equipment side box 25a so that, when the safety plug unit open/close cover 21 is closed, this close condition is maintained.

The plug attaching surface 25a1 of the wiring equipment side box has an opening for attaching the plug base and another opening for attaching the breaker both of which are not shown. The safety plug unit connecting base 40 and the breaker 30 are inserted into the respective openings to be fixed.

Next, the safety plug unit connecting base 40 will be described.

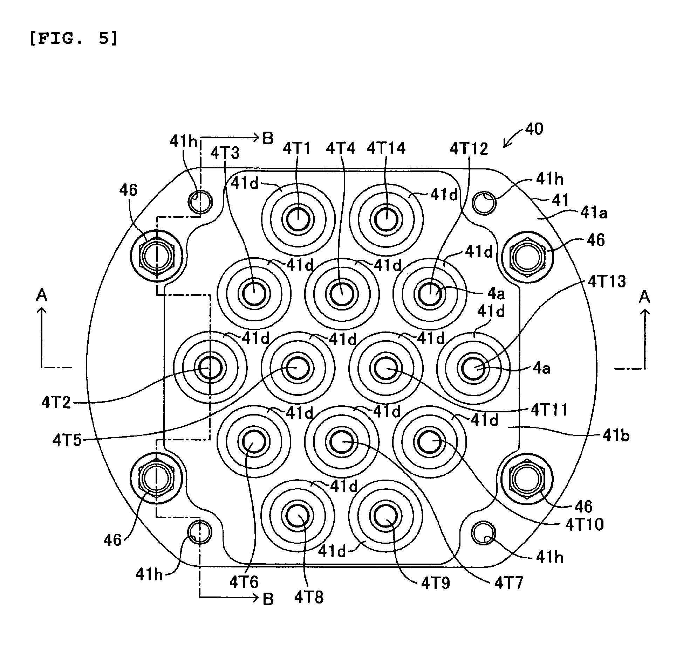

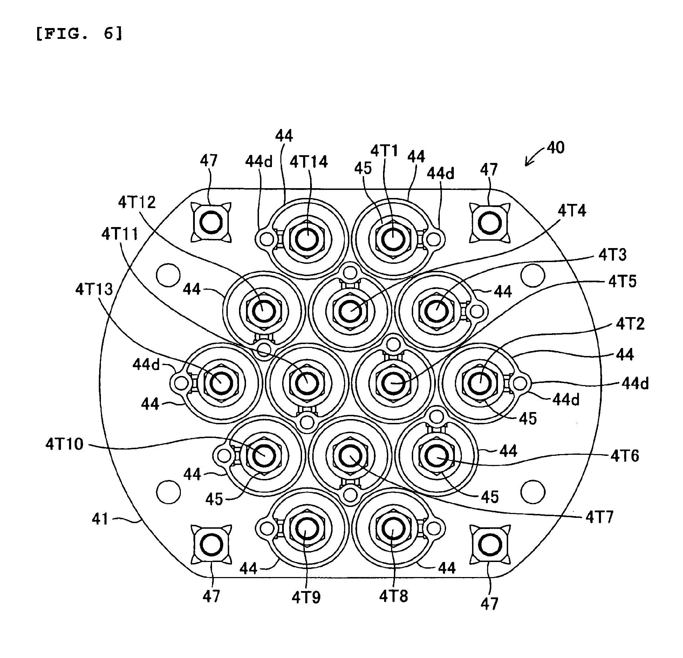

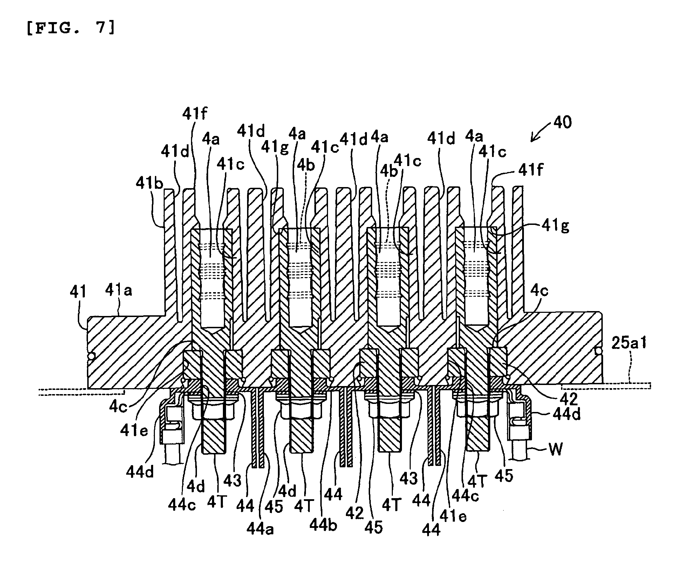

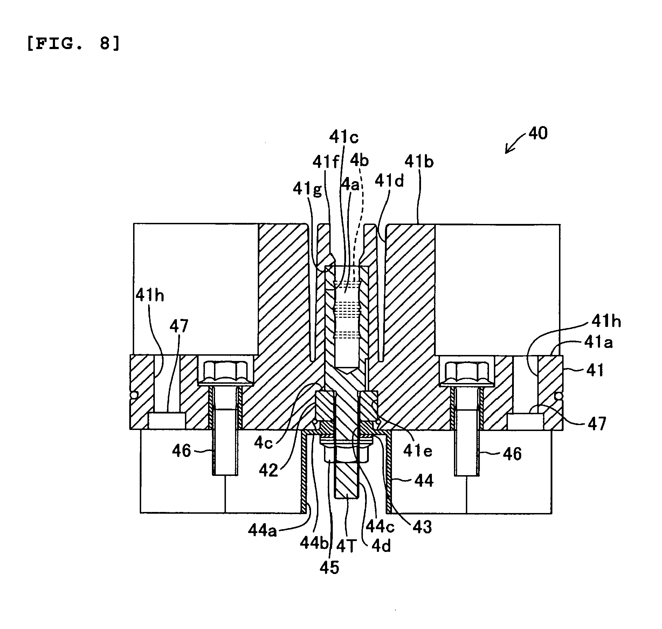

FIG. 5 is a plan view showing a top surface of the safety plug unit connecting base 40. FIG. 6 is a bottom plan view showing a bottom surface of the safety plug unit connecting base 40. FIG. 7 is a cross sectional, vertical, side elevational view taken along the line A-A of FIG. 5. FIG. 8 is a cross sectional, vertical, front elevational view taken along the line B-B of FIG. 5.

The safety plug unit connecting base 40 has a body base section 41 including a generally elliptical body plate 41a fixed to the plug attaching surface 25a1 and a female electrode collective section 41b which extends upward from a top surface of the body plate 41a and acts as a joining section for joining the section 41 with the safety plug unit 60, the body plate 41a and the female electrode collective section 41 being made of a nonconductive material and being unitarily formed with each other.

The body base section 41 has fourteen electrode containing apertures 41c each containing the respective female electrode body 4T and disposed at equal intervals in a plane (length and breadth directions). The body base section 41 also has circular grooves 41d defined around the respective electrode containing apertures 41c so that lower tubular guards 61d, which will be described later, of the safety plug unit 60 fit in the apertures 41c.

Additionally, in FIGs. 5 and 6, the reference numerals and symbols of the respective female electrode bodies 4T are followed by electrode numbers n (n=1~14) corresponding to those of FIG. 19 to indicate individual positions of the respective female electrode bodies 4T1-4T14.

The body base section 41 has reverse side surface openings 41e communicating with the respective electrode containing apertures 41c and each having an inner diameter larger than an inner diameter of the respective electrode containing aperture 41c and formed in a reverse side surface of the body base section 41. The female electrode bodies 4T are inserted into the electrode containing apertures 41c from and through the reverse side openings 41e. Each electrode containing aperture 41c has a stopper 41g which defines a small diameter step and is positioned slightly lower than a distal end opening 41f at the top. Each stopper 41g contacts with a distal end surface of the respective female electrode body 4T to function as a slip-off preventing section in the upward direction.

Each female electrode body 4T has a male electrode insertable section 4a into which the respective male electrode body 6T of the safety plug unit 60 is inserted. An inner circumferential surface of each male electrode insertable section 4a has a plurality of ring-shaped swells and recesses 4b. When the male electrode body 6T of the safety plug unit 60 is inserted into the section 4a, the swells and recesses 4b assure adhesiveness between the particular female electrode body 4T and the associated male electrode body 6T.

Each female electrode body 4T has a different diameter step section 4c formed therearound and a threaded portion 4d formed at a reverse end side thereof. A ring body 42 is put onto the female electrode body 4T from and through the reverse end thereof to make it contact with the different diameter step section 4c. Further, a cylindrical terminal guard 44 having a wiring cable terminal 43 is put onto the female electrode body 4T. Afterwards, a nut 45 is screwed up onto the threaded portion 4d of the female electrode body 4T. Thereby, the wiring cable terminals 43 are coupled with the respective female electrode bodies 4T.

Each cylindrical terminal guard 44 is a non-bottom cylindrical body made of a nonconductive material and having a cylindrical side surface 44a and a top surface 44b with its bottom being opened. The top surface 44b has an opening 44c into which each female electrode body 4T is inserted. The cylindrical side surface 44a has a cable holding ring 44d for holding a wiring cable W formed unitarily with the guard 44. A caulking portion of the wiring cable terminal 43 is held inside of the cable holding ring 44d.

The distal end opening 41f of each electrode containing aperture 41c of the female electrode collective section 41b has a size which does not allow a finger of a human being to go through. The female electrode collective section 41b contains the female electrode bodies 4T at deep positions so that the distal ends of the respective female electrode bodies 4T are placed deeper than the distal end openings 41f of the respective electrode containing apertures 41c.

The safety plug unit connecting base 40 as thus formed has the fourteen female electrode bodies 4T arranged at equal intervals in the plane. In this embodiment, neighboring female electrode bodies 4T are arranged to be placed coaxially and at equal intervals.

Four fastening bolts 46 are inserted into the body plate 41a of the safety plug unit connecting base 40 to fasten the safety plug connecting base 40 to the plug attaching surface 25a1 of the wiring equipment side box 25a. The fastening bolts 46 are screwed up into bolt holes, which are not shown, formed in the plug attaching surface 25a1; thereby, the safety plug unit connecting base 40 is fastened to the plug attaching surface 25a1 of the wiring equipment side box 25a.

The body plate 41a of the safety plug unit connecting base 40 has through-holes 41h formed next to the respective fastening bolts 46. Each through-hole 41h has a larger diameter at the reverse surface side of the body plate 41a than the other side. An embedded nut 47 is embedded at this each large diameter portion. The through-holes 41h and the embedded nuts 47 are provided for fastening the safe plug unit 60 to the safe plug unit connecting base 40 by bolts (not shown) not to separate from each other when they are coupled with each other.

Portions to which the fourteen female electrode bodies 4T1-4T14 provided to the safe plug unit connecting base 40 are connected are those which are described with reference to FIGs. 2 and 19.

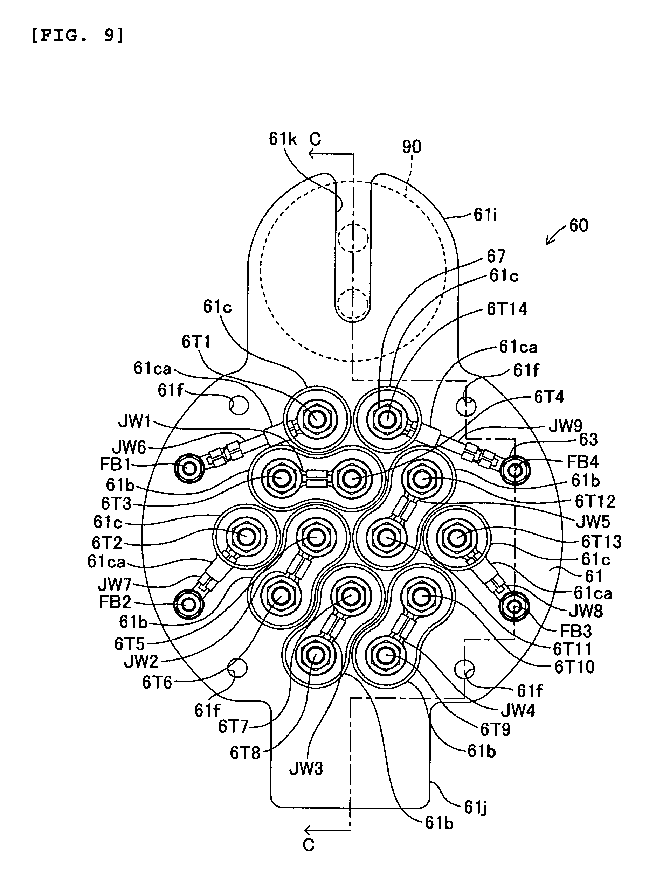

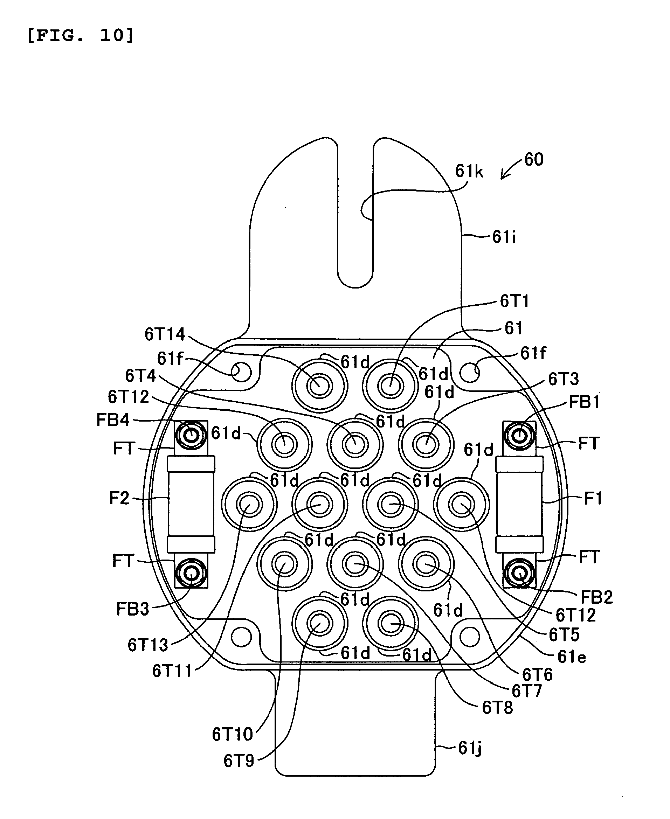

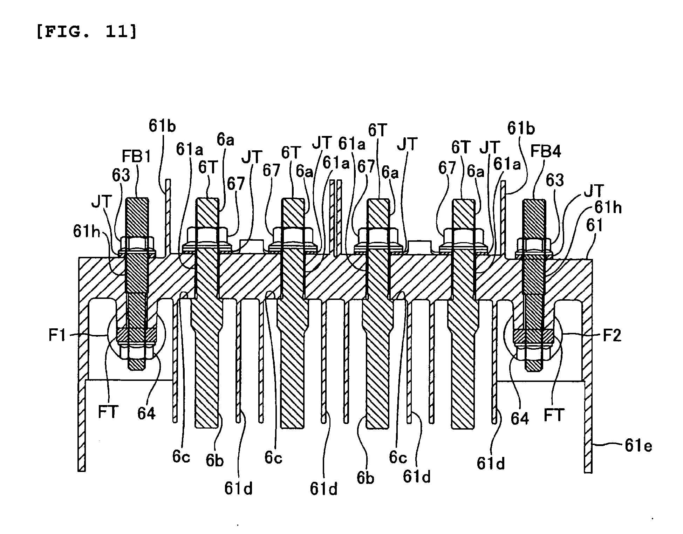

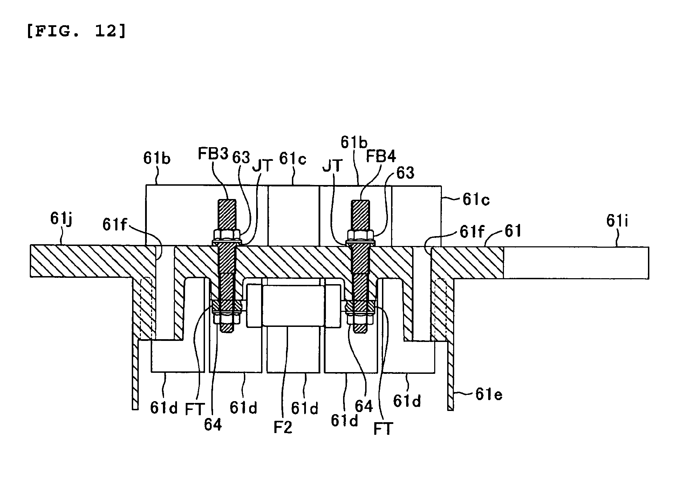

Next, the safety plug unit 60 will be described. FIG. 9 is a top plan view showing a top surface of the safety plug unit. FIG. 10 is a bottom plan view showing a bottom surface of the safety plug unit. FIG. 11 is a vertical, cross sectional, side elevational view for explaining the major part under a condition that the male electrode bodies are attached. FIG. 12 is a cross sectional, front elevational view taken along the line C-C of FIG. 9.

The safety plug unit 60 includes a body plate 61 and the fourteen male electrode bodies 6T inserted into through-holes 61a defined by the body plate 61. The fourteen male electrode bodies 6T are arranged at equal intervals so as to be inserted into the male electrode insertable sections 4a of the respective female electrode bodies 4T of the safe plug unit connecting base 40 when the safe plug unit 60 is coupled with the safe plug unit connecting base 40.

Additionally, in FIGs. 9 and 10, the reference numerals and symbols of the respective male electrode bodies 6T are followed by electrode numbers n (n=1~14) corresponding to those of FIG. 19 to indicate individual positions of the respective male electrode bodies 6T1-6T14.

The body plate 61 has five top joining tubular guards 61b surrounding some pairs of the male electrode bodies 6T and four top single tubular guards 61c surrounding individually one of the remainder male electrode bodies 6T, all of the guards 61b, 61c extending upward from a top surface of the body plate 61. The pairs of the male electrode bodies 6T surrounded by the top joining tubular guards 61b include a pair of the male electrode body 6T3 and the male electrode body 6T4, a pair of the male electrode body 6T5 and the male electrode body 6T6, a pair of the male electrode body 6T7 and the male electrode body 6T8, a pair of the male electrode body 6T9 and the male electrode body 6T10, and a pair of the male electrode body 6T11 and the male electrode body 6T12. The remainder male electrode body 6T1, male electrode body 6T2, male electrode body 6T13, male electrode body 6T14 are surrounded by the top single tubular guards 61c.

An insertion section 61ca is unitarily formed with each top single tubular guard 61c to have a jumper wiring, which will be described later, inserted therethrough.

Also, the body plate 61 has bottom tubular guards 61d surrounding individually one of the fourteen male electrode bodies 6T and extending downward from a bottom surface of the body plate 61. ln addition, the body plate 61 has a bottom circumferential guard 61e extending downward from the body plate 61 to surround the fourteen bottom tubular guards 61d and to tightly contact with an outer circumferential surface of the safe plug unit connecting base 40 when the safe plug unit 60 is coupled with the safe plug unit connecting base 40. The top joining tubular guards 61b, the top single tubular guards 61c, the bottom tubular guards 61d and the bottom circumferential guard 61e are made of a nonconductive material and are unitarily formed with the body plate 61.

The body plate 61 has through-holes 61f defined at four positions opposing the through-holes 41h of the safety plug unit connecting base 40 when the safe plug unit 60 is coupled with the safe plug unit connecting base 40.

Each male electrode body 6T has a threaded portion 6a formed at a basal end side (top surface side of the body plate) and a contact section 6b which can be fitted into the respective female electrode body 4T of the safe plug unit connecting base 40 formed at a distal end side (reverse surface side of the body plate 61). Also, each male electrode body 6T has a different diameter step section 6c formed at a mid portion thereof in its axial direction to contact with a reverse surface of the body plate 61 so as to be positioned and fixed to the body plate 61 with a certain protruding length.

The body plate 61 has through-holes 61h defined at two positions on right and left sides and outside of the electrode body collective area in which the fourteen male electrode bodies 6T are equally arranged. Fuse mounting bolts FB1, FB2, FB3, FB4 are inserted into the through holes 61h. Hereunder, the four fuse mounting bolts are simply called "fuse mounting bolt FB" in generic.

The fuse mounting bolt FB1 and the fuse mounting bolt FB2 are used for fixing the fuse F1, while the fuse mounting bolt FB3 and the fuse mounting bolt FB4 are used for fixing the fuse F2. The respective fuses F1, F2 are fixed to the body plate 61 with connecting terminals FT thereof being inserted into the respective fuse mounting bolts FB from the bottom surface side of the body plate 61 and fastened up by nuts 63, 64 from the top surface side of the body plate 61 and from the bottom surface side of the connecting terminal FT.

On the top surface of the body plate 61, the pairs of the male electrode bodies 6T surrounded by the respective top joining tubular guards 61b are connected to the counterparts through jumper wirings JW1, JW2, JW3, JW4, JW5. That is, the male electrode body 6T3 and the male electrode body 6T4 are connected to each other through the jumper wiring JW1. The male electrode body 6T5 and the male electrode body 6T6 are connected to each other through the jumper wiring JW2. The male electrode body 6T7 and the male electrode body 6T8 are connected to each other through the jumper wiring JW3. The male electrode body 6T9 and the male electrode body 6T10 are connected to each other through the jumper wiring JW4. The male electrode body 6T11 and the male electrode body 6T12 are connected to each other through the jumper wiring JW5.

The four male electrode bodies 6T1, 6T2, 6T13, 6T14 and four fuse mounting bolts FB1, FB2, FB3, FB4 are connected to each other, respectively, through jumper wirings JW6, JW7, JW8, JW9. That is, the male electrode body 6T1 and the fuse mounting bolt FB1 are connected to each other through the jumper wiring JW6. The male electrode body 6T2 and the fuse mounting bolt FB2 are connected to each other through the jumper wiring JW7. The male electrode body 6T13 and the fuse mounting bolt FB3 are connected to each other through the jumper wiring JW8. The male electrode body 6T14 and the fuse mounting bolt FB4 are connected to each other through the jumper wiring JW9.

The jumper wirings JW1-JW5 are electrically connected to the male electrode bodies 6T3, 6T4, 6T5, 6T6, 6T7, 6T8, 6T9, 6T10, 6T11, 6T12 with connecting terminals JT of ends of the respective jumper wirings being putted onto the respective male electrode bodies and fastened up by nuts 67.

The jumper wirings JW6-JW9 are electrically connected to the male electrode bodies 6T1, 6T2, 6T13, 6T14 with one connecting terminals JT thereof being putted onto the respective male electrode bodies and fastened up by the nuts 67, and also are electrically connected to the fuse mounting bolts FB1, FB2, FB3, FB4 with the other connecting terminals JT thereof being putted onto the respective fuse mounting bolts and fastened up by the nuts 63. On this occasion, the male electrode bodies 6T and the fuse mounting bolts FB are also firmly attached to the body plate 61.

Accordingly, the male electrode body 6T3 and the male electrode body 6T4, the male electrode body 6T5 and the male electrode body 6T6, the male electrode body 6T7 and the male electrode body 6T8, the male electrode body 6T9 and the male electrode body 6T10, and the male electrode body 6T11 and the male electrode body 6T12 are electrically connected to each other. Also, the male electrode body 6T1 and the male electrode body 6T2, and the male electrode body 6T13 and the male electrode body 6T14 are electrically connected to each other through the fuse F1 and the fuse F2, respectively.

Additionally, the male electrode bodies 6T and the jumper wirings JW1-JW9 correspond to the coupling electrodes of the present teaching.

The body plate 61 has flange sections 61i, 61j extending rightward and leftward (right and left directions relative the advancing direction of the vehicle) from the coupling area of the male electrode bodies 6T. The flange section 61i extending on the right side (upper side of FIG. 9) of the body plate 61 covers a top end of a power supply coupler device 100 and has a slit 61K in the center thereof to allow a power supply output coupler 90 to extend therethrough. The flange section 61j extending on the left side (lower side of FIG. 9) covers a top end of the breaker 30.

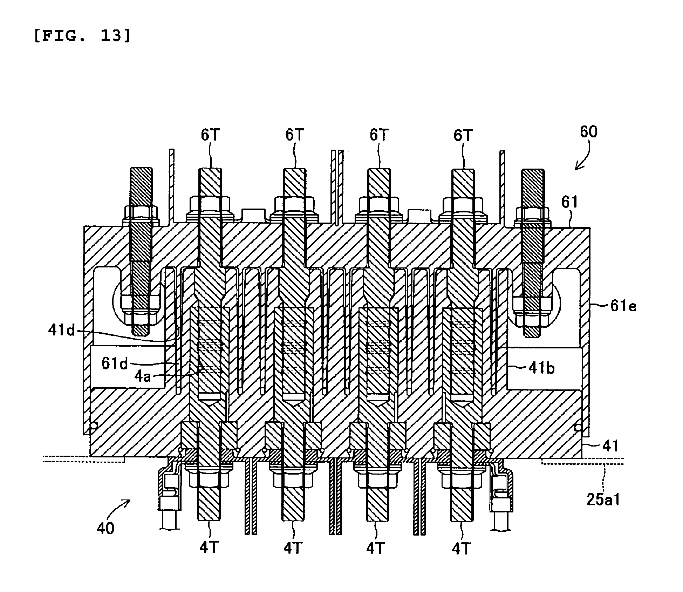

When the safety plug unit 60 as thus constructed is placed to oppose the safe plug unit connecting base 40 and is pushed thereto, as shown in FIG. 13, the bottom tubular guards 61d of the safety plug unit 60 are inserted into the circular grooves 41d of the safety plug unit base 40, and the male electrode bodies 6T of the safety plug unit 60 are inserted into the male electrode insertable sections 4a of the female electrode bodies 4T of the safety plug unit base 40. Thereby, the fourteen female electrode bodies 4T1, 4T2, 4T3, 4T4, 4T5, 4T6, 4T7, 4T8, 4T9, 4T10, 4T11, 4T12, 4T13, 4T14 of the safety plug unit connecting base 40 and the fourteen male electrode bodies 6T1, 6T2, 6T3, 6T4, 6T5, 6T6, 6T7, 6T8, 6T9, 6T10, 6T11, 6T12, 6T13, 6T14 of the safety plug unit 60 are electrically connected to each other, respectively (the counterparts having the same electrode number).

Accordingly, the minus power supply terminal BT- of the sixth battery module B6 and the plus power supply terminal BT+ of the fifth battery module B5 are connected to each other through the jumper wiring JW1 provided to the safety plug unit connecting base 40. The minus power supply terminal BT- of the fifth battery module B5 and the plus power supply terminal BT+ of the fourth battery module B4 are connected to each other through the jumper wiring JW2. The minus power supply terminal BT- of the fourth battery module B4 and the plus power supply terminal BT+ of the third battery module B3 are connected to each other through the jumper wiring JW3. The minus power supply terminal BT- of the third battery module B3 and the plus power supply terminal BT+ of the second battery module B2 are connected to each other through the jumper wiring JW4. The minus power supply terminal BT- of the second battery module B2 and the plus power supply terminal BT+ of the first battery module B1 are connected to each other through the jumper wiring JW5. Also, the plus power supply terminal BT+ of the sixth battery module B6 is connected to the plus female electrode body 8T+ via the fuse F1 through the jumper wirings JW6, JW7. The minus power supply terminal BT- of the first battery module B1 is connected to the minus female electrode body 8T- via the breaker 30, the fuse F2 and the relay 140 through the jumper wirings JW8, JW9.

As the result, the circuit including six battery modules B connected in series is formed.

When the safety plug unit 60 is coupled with the safety plug unit connecting base 40 as discussed above, the bottom circumferential guard 61e of the safety plug unit 60 covers the circumference of the safety plug unit connecting base 40 in the tightly coupling state.

Under the condition that the safety plug unit 60 is coupled with the safety plug unit connecting base 40, the bolts, which are not shown, are inserted into the through-holes 61f from the location above the safety plug unit 60 and are screwed up into the embedded nuts 47 positioned on the bottom surface of the safety plug unit connecting base 40. Thereby, the safety plug unit 60 and the safety plug unit connecting base 40 are surely joined with each other.

In such an additional point, the safety is taken into consideration in the safety plug device 50.

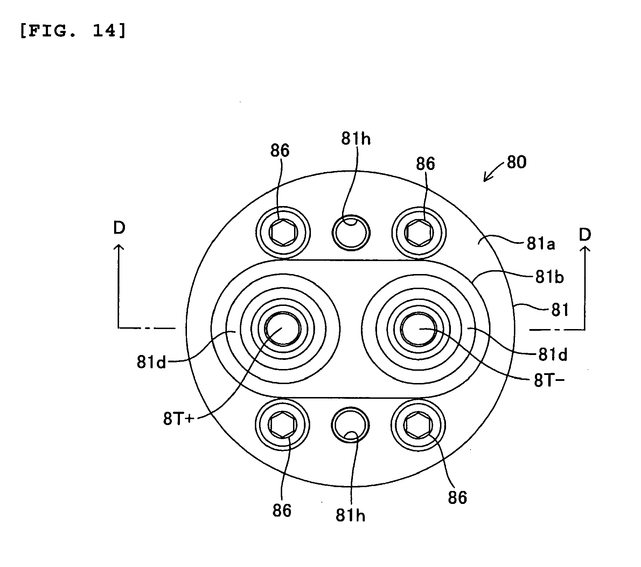

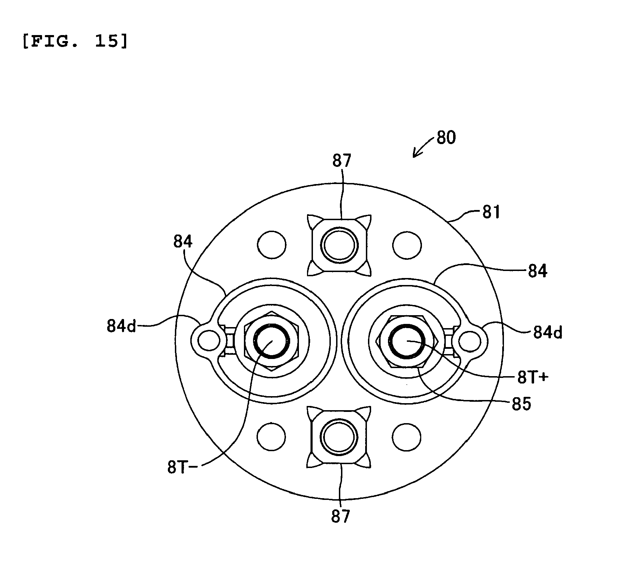

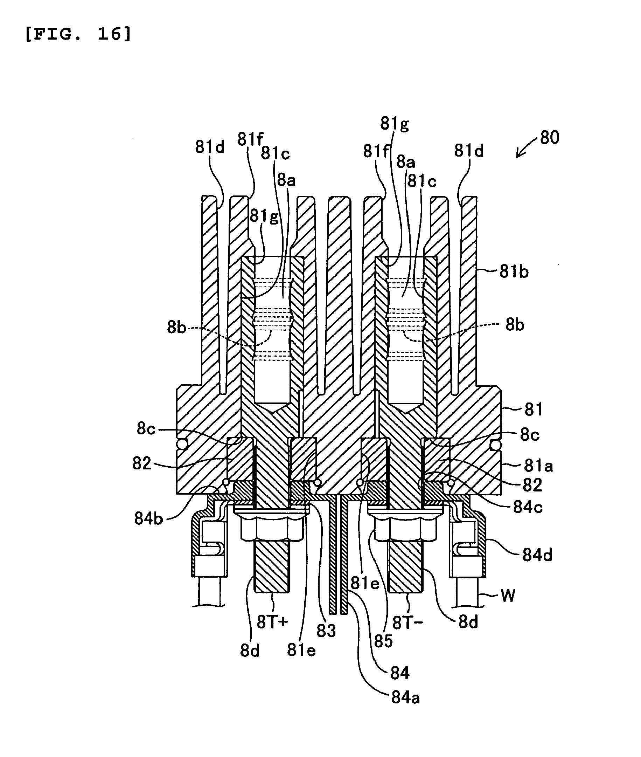

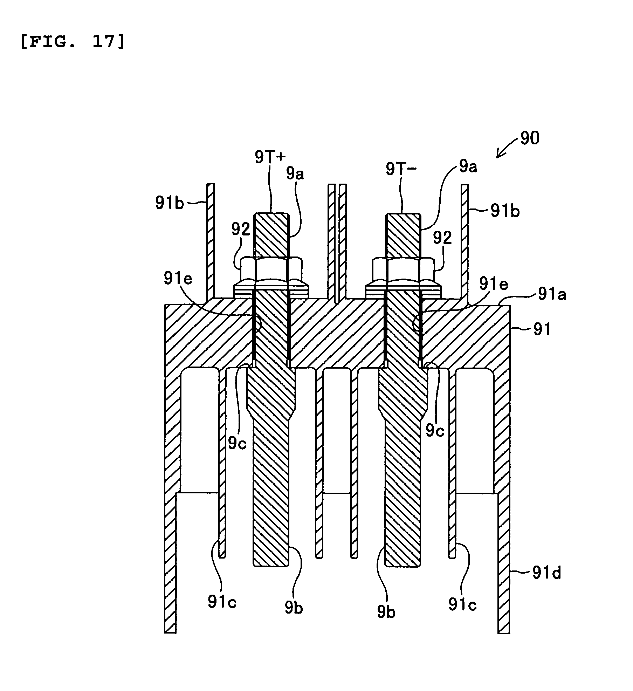

Next, the power supply coupler device 100 will be described. FIG. 14 is a plan view showing a top surface of the power supply output base 80. FIG. 15 is a bottom plan view showing a bottom surface of the power supply output base 80. FIG. 16 is a cross sectional, front elevational view taken along the line D-D of FIG. 14. FIG. 17 is a vertical, cross sectional, front elevational view of the power supply output coupler 90.

The power supply output base 80 has a body base section 81 including a disk-shaped body plate 81a fixed to an input/output base attaching surface 25a2 and a coupler joint section 81b protruding upward from a top surface of the body plate 81a to be a joint portion with the power supply output coupler 90, the body plate 81a and the coupler joint section 81b being made of a nonconductive material and unitarily formed with each other.

The coupler joint section 81b has two electrode containing apertures 81c formed for containing a plus female electrode body 8T+ and a minus female electrode body 8T-(simply called "female electrode body 8T" in generic if they do not need to differ from each other) disposed side by side. A circular groove 81d into which an electrode protecting tube 91c, which will be described later, of the power supply output coupler 90 is fitted is formed around each electrode containing aperture 81c.

The body base section 81 has reverse side openings 81e communicating with the respective electrode containing apertures 81c and each having an inner diameter larger than an inner diameter of the respective electrode containing aperture 81c formed in a reverse side surface of the body base section 81. The female electrode bodies 8T are inserted into the electrode containing apertures 81c from and through those two reverse side surface openings 81e. Each electrode containing aperture 81c has a stopper 81 g which defines a small diameter step and is positioned slightly lower than a distal end opening 81f at the top. Each stopper 81g contacts with a distal end surface of the respective female electrode body 8T to function as a slip-off preventing section in the upward direction.

Each female electrode body 8T has a male electrode insertable section 8a at its distal end into which the respective male electrode body 9T of the power supply output coupler 90 is inserted. An inner circumferential surface of each male electrode insertable section 8a has a plurality of ring-shaped swells and recesses 8b. When the male electrode body 9T of the power supply output coupler 90 is inserted into the section 8a, the swells and recesses 8b assure adhesiveness between the particular female electrode body 8T and the associated male electrode body 9T.

Each female electrode body 8T has a different diameter step section 8c formed therearound and a threaded portion 8d formed at a reverse end side thereof. A ring body 82 is put onto the female electrode body 8T from and through the reverse end thereof to make it contact with the different diameter step section 8c. Further, a cylindrical terminal guard 84 having a wiring cable terminal 83 is put onto the female electrode body 8T. Afterwards, a nut 85 is screwed up onto the threaded portion 8d of the female electrode body 8T. Thereby, the wiring cable terminals 83 are coupled with the respective female electrode bodies 8T.

Each cylindrical terminal guard 84 is a non-bottom cylindrical body made of a nonconductive material and having a cylindrical side surface 84a and a top surface 84b with its bottom being opened. The top surface 84b has an opening 84c into which each female electrode body 8T is inserted. The cylindrical side surface 84a has a cable holding ring 84d for holding a wiring cable W formed unitarily with the guard 84. A caulking portion of the wiring cable terminal 83 is held inside of the cable holding ring 84d.

The plus female electrode body 8T+ is connected to the female electrode body 4T1 of the safety plug unit connecting base 40 through one of the wiring cables W, while the minus female electrode body 8T- is connected to the relay 140 through another one of the wiring cables W.

The distal end opening 81f of each electrode containing aperture 81c of the coupler joint section 81b has a size which does not allow a finger of a human being to go through. The coupler joint section 81b contains the female electrode bodies 8T at deep positions so that the distal ends of the respective female electrode bodies 8T are placed deeper than the distal end openings 81f of the respective electrode containing apertures 81c.

Four fastening bolts 86 are inserted into the body plate 81a of the power supply output base 80 to fasten the power supply output base 80 to the input/output base attaching surface 25a2 of the wiring equipment side box 25a. The fastening bolts 86 are screwed up into bolt holes, which are not shown, formed in the input/output base attaching surface 25a2; thereby, the power supply output base 80 is fastened to the wiring equipment side box 25a.

The body plate 81a of the power supply output base 80 has through-holes 81h formed between the respective fastening bolts 86. Each through-hole 81h has a larger diameter at the reverse surface side of the body plate 81a than the other side. An embedded nut 87 is embedded at this each large diameter portion. The through-holes 81h and the embedded nuts 87 are provided for fastening the power supply output coupler 90 to the power supply output base 80 by bolts not to separate from each other when they are coupled with each other.

The power supply output coupler 90 is to supply the electric power to the vehicle electrical loads (electric motor) through wiring cables (not shown) by being fitted into the coupler joint section 81b of the power supply output base 80. As shown in the cross sectional view of FIG. 17, the coupler 90 includes a coupler body 91 made of a nonconductive material, and the plus male electrode body 9T+ and the minus male electrode body 9T- (simply called "male electrode body 9T" in generic if they do not need to differ from each other) both inserted into the coupler body 91 to be fixed thereto.

The coupler body 91 includes a disk-shaped body plate 91a defining two inserting apertures 91e into which the plus male electrode body 9T+ and the minus male electrode 9T- are inserted side by side, two top tubular guards 91b each protruding from a top surface of the body plate 91a to surround the respective male electrode bodies 9T, two bottom tubular guards 91c each protruding from a bottom surface of the body plate 91a to surround the respective male electrode bodies 9T, and a bottom circumferential guard 91d protruding downward from a circumference of the bottom surface of the body plate 91a. The bottom circumferential guard 91d is a portion that tightly contacts with an outer circumferential surface of the power supply output base 80 when the power supply output coupler 90 is coupled with the power supply output base 80.

The plus male electrode body 9T+ and the minus male electrode body 9T- are disposed side by side so that they can be inserted into the male electrode insertable sections 8a of the plus female electrode body 8T+ and the minus female electrode body 8T-, respectively, when the power supply output coupler 90 is coupled with the coupler joint section 81b of the power supply output base 80.

Each male electrode body 9T has a threaded portion 9a formed at a basal end side (top surface side of the body plate) and a contact section 9b which can be fitted into the respective female electrode body 8T of the power supply output base 80 formed at a distal end side (reverse surface side of the body plate 91). Also, each male electrode body 9T has a different diameter step section 9c formed at a mid portion thereof in its axial direction to contact with a bottom surface of the body plate 91a so as to be positioned and fixed to the body plate 91a with a certain protruding length.

The male electrode bodies 9T are inserted into the body plate 91a from the bottom surface side thereof, and wiring cable terminals, which are not shown, to the vehicle electrical loads are putted onto the male electrode bodies 9T from the top surface side thereof. Nuts 92 are screwed up from the basal end side. Thereby, the power supply output coupler 90 is assembled.

Additionally, the body plate 91a has through-holes (not shown) at positions opposing the through-holes 81h of the power supply output base 80 when the power supply output coupler 90 is coupled with the power supply output base 80.

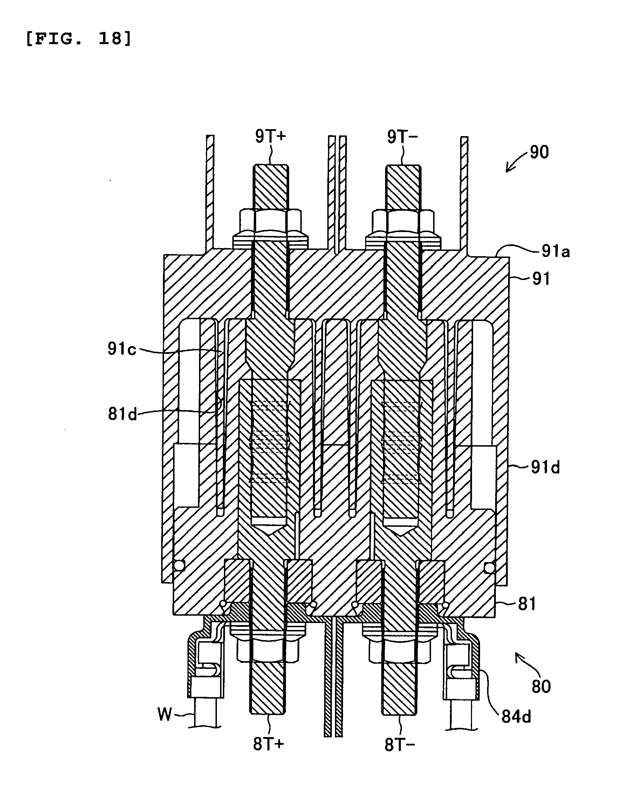

When the power supply coupler 90 as thus constructed is placed to oppose the power supply output base 80 and is pushed thereto, as shown in FIG. 18, the bottom tubular guards 91c of the power supply output coupler 90 are inserted into the circular grooves 81d of the power supply output base 80, and the male electrode bodies 9T of the power supply output coupler 90 are inserted into the male electrode insertable sections 8a of the female electrode bodies 8T of the power supply output base 80. On this occasion, the bottom circumferential guard 91d of the power supply output coupler 90 covers the circumference of the power supply output base 80 in the tightly coupling state.

Under the condition that the power supply output coupler 90 is coupled with the power supply output base 80, the bolts, which are not shown, are inserted into the through-holes from the location above the power supply output coupler 90 and are screwed up into the embedded nuts 87 positioned on the bottom surface of the power supply output coupler 90. Thereby, the power supply output coupler 90 and the power supply output base 80 are surely joined with each other.

The signal input base 110 is disposed in front of the power supply output base 80 in the input/output base attaching surface 25a2 of the wiring equipment side box 25a. This signal input base 110 functions as a signal input terminal base, with the signal input coupler 115 being coupled therewith, through which the ON signal of the ignition switch (not shown) is inputted.

Also, the wiring equipment side box 25a has the micro-switch 130 inside thereof. The operative piece 133 of the micro-switch 130 is exposed from the input/output base attaching surface 25a2. When the safety plug open/close cover 21 is closed, the operative piece 133 is pushed downward to make the contact points be connected.

According to the power supply device 1 of the embodiment described above, the removal of the safety plug unit 60 from the safety plug unit connecting base 40 disconnect the battery modules B from each other in maintenance and inspection services or in assembling work. In this embodiment, the safety plug unit 60 cuts off all of the connections between the battery modules B connected in series. Thus, the voltage applied to the male electrode bodies 4T of the safety plug unit connecting base 40 is equal to the output voltage of the single battery module B at the maximum. High level safety thus is assured.

Particularly, in this embodiment, the output voltage of the respective battery modules B is limited to be less than 50V. Accordingly, even if a human being touches the female electrode bodies 4T of the safety plug unit connecting base 40, almost no effect is exerted on the human body.

Each battery module B is formed with the package containing multiple cells connected to each other in series. Also, the battery containing box 20 surrounds the battery modules B. Therefore, each battery module B is superior in the anti-shock nature, heat resistance and whether resistance and is extremely effective for considering the safety when the battery module B is planned to have high voltage.

The diameter of the distal end opening 41f of each electrode containing aperture 41c containing the respective female electrode body 4T of the safety plug unit connecting base 40, and the diameter of the distal end opening 81f of each electrode containing aperture 81c containing the respective female electrode body 8T of the power supply output base 80 are decided to be small enough that does not allow a finger of a human being to go through. The safety thus can be assured further.

The multiple female electrode bodies 4T are collectively positioned on the safety plug unit connecting base 40 and are arranged at the equal intervals in the plane. Thus, the arrangement area can be smaller, and the safety plug device 50 (the safety plug unit connecting base 40 and the safety plug unit 60) can be downsized.

Because each battery module B contains multiple cells connected to each other in series as a package so that the output voltage thereof is greater than 12V, the battery module B can supply a voltage higher than that of a normal vehicle battery beyond a voltage which a single battery module can supply. Therefore, a high voltage that is suitable for a hybrid drive can be obtained with a less number of battery modules while keeping the safety.

As a result, the power supply device itself can be downsized and can be disposed above the rear wheel of the motorcycle.

When the safety plug unit 60 is removed, the safety plug unit open/close cover 21 is inevitably opened. Together with this action, the micro-switch 130 is moved to the OFF condition to open the battery power supply circuit. The wrong use such that the safety plug unit 60 is removed while a large current flows to the vehicle electrical loads from the power supply output coupler 90 can be avoided. Consequently, damages of equipment and wirings made by large surge voltage, erroneous operations of the equipment made by generation of large noises, or the like can be prevented. The safety is further improved, accordingly.

The breaker 30 is positioned between the series power supply circuit of the battery modules B and the power supply output base 80. Therefore, even if any excessive current consumption or an accident of short circuit occurs between the power supply device 1 and the vehicle electrical loads, the breaker inevitably disconnects the circuit to improve the safety.

The safety plug unit 60 has the fuses F connected to the battery series circuit in series therein. Thus, not only the circuit is disconnected against the excessive current consumption between the power supply device 1 and the vehicle electrical loads or any short circuit accidents but also the current flow is surely intercepted against any short circuit accidents on the power supply side in the power supply device 1 with which the breaker is not able to cope, any malfunctions of the breaker 30 or the like. The safety thus can be improved further. In addition, because the safety plug unit 60 has the fuses F therein, there is no risk of electric shock in the exchange service of the fuses.

The safety plug unit connecting base 40 has the female electrode body 4T1 and the female electrode body 4T14 electrically connected to the plus female electrode body 8T+ and the minus female electrode body 8T- of the power supply output base 80, respectively. When the safety plug 60 is removed from the safety plug unit connecting base 40, both ends of the series circuit of the battery modules B and the output electrodes (the plus female electrode body 8T+ and the minus female electrode body 8T-) are disconnected from each other. Hence, no battery voltage is applied to the power supply output base 80 at all. The safety is improved further, accordingly.

In this embodiment, the power supply output coupler 90 is disposed below the flange section 61i of the safety plug 60. Thus, when the power supply output coupler 90 is removed from the power supply output base 80, the safety plug unit 60 is inevitably removed previously. The power supply circuit for supplying the power to the power supply output base 80 is surely disconnected from the power supply output base 80 and the safety is improved further.

The embodiment of the power supply device 1 for an electric vehicle is described above. The present teaching, however, is not limited to the embodiment. Various modifications or alternatives are applicable as long as they do not deviate from the objects of the present teaching.

For example, in the embodiment, the power supply device applied to the hybrid type motorcycle is described. However, the present teaching can be applied to four-wheeled automobiles or the like other than the motorcycles. In addition, the present teaching is applicable to electric automobiles that have no engine.

The description above discloses (amongst others), an embodiment directed to a power supply device for an electric vehicle, which includes a plurality of batteries, a battery containing box for containing the plurality of batteries, a safety plug unit connecting base that has a plurality of plug connective plus electrodes each electrically connected to a plus terminal of the respective battery through a wiring and a plurality of plug connective minus electrodes each electrically connected to a minus terminal of the respective battery through a wiring, the plug connective plus electrodes and the plug connective minus electrodes being disposed out of the battery containing box, and a safety plug unit having coupling electrodes that are removably coupled with the safety plug unit connecting base and which, while being coupled therewith, electrically connect the plug connective plus electrodes and the plug connective minus electrodes, and by coupling the safety plug unit with the safety plug unit connecting base, the respective batteries being connected to each other in series to output a series voltage from a power supply output section. The plug connective plus electrodes and the plug connective minus electrodes are disposed in such a manner that all of the plus terminals and all of the minus terminals which function as series connective terminals between the batteries are connected to each other through wirings. The safety plug unit cuts off all of the series connections between the batteries when the safety plug unit is removed from the safety plug unit connecting base.

In particular, according to the present embodiment having the construction described above, all of the series connections between the batteries are cut off. Thus, the voltage applied to the plug connective plus electrodes in the safety plug unit connecting base can be equalized to voltage of a single battery, i.e., can be reduced to the minimum amount. The safety in maintenance and inspection services or in assembling work thus can be improved.

Additionally, in this connection, the safety plug unit connecting base can be provided not only with the series connecting electrodes between the batteries but also with, including respective terminal end electrodes of the series circuit, the plug connective plus electrodes electrically connected to all of the plus terminals of the batteries and the plug connective minus electrodes electrically connected to all of the minus terminals of the batteries. Further, the safety plug unit connecting base can be additionally provided with a plug connective electrode or the like that is electrically connected to the power supply output section.

Another preferred feature of the present teaching is that the safety plug unit connecting base is a base in which the plug connective plus electrodes and the plug connective minus electrodes are collectively positioned in a limited area and are arranged generally at equal intervals in a plane.

According to this feature, the plug connective plus electrodes and the plug connective minus electrodes are collectively positioned in a limited area and are arranged generally at equal intervals in a plane on the safety plug unit connecting base. That is, because the multiple plug connective plus electrodes and plug connective minus electrodes are collectively positioned on the safety plug base and are arranged at the equal intervals in the plane (length and breadth directions), an arrangement area of the plug connective electrodes can be smaller and the safety plug unit connecting base and the safety plug unit can be downsized. As a result, the power supply device can be downsized.

If the output voltage of each battery is lowered to realize safety, the number of batteries needs to be increased to have high voltage and thus the number of divisions of the series circuit of the batteries needs to be increased. Accordingly, the number of plug connective electrodes inevitably increases. In the present invention, however, the plug connective electrodes are collectively positioned in the limited area and are arranged generally at the equal intervals in the plane. Therefore, the safety can be improved while upsizing of the safety plug unit and the safety plug unit connecting base being avoided. Also, the safety plug unit can be readily handled because of being downsized.

A further preferred feature of the present teaching is that each one of the batteries contains a plurality of cells connected to each other in series as a package, and an output voltage thereof is greater than 12V and less than 50V.

According to this feature, because the output voltage of each battery is less than 50V, the voltage applied to the respective plug connective plus electrodes of the safety plug unit connecting base can be lowered less than 50V. Accordingly, even if a human being touches the plug connective plus electrodes, almost no effect is exerted on the human body.

Also, because each battery contains the plurality of cells connected to each other in series as a package so that the output voltage thereof is greater than 12V, each package can supply a voltage higher than that of an ordinary battery whose specification is 12V beyond a voltage which is a single package can supply. Thereby, high voltage can be outputted with a less number of batteries while keeping the safety. Accordingly, the power supply device itself can be downsized.

A further preferred feature of the present teaching is that the power supply device further includes switching means disposed in a power supply line for selectively opening and closing the power supply circuit, removal preventing means for mechanically preventing the safety plug unit from being removed from the safety plug unit connecting base, and switch operating means for keeping the switching means under an open condition thereof when the removal preventing means releases the safety plug unit.

According to this feature, the removal preventing means mechanically prevents the safety plug unit from being removed from the safety plug unit connecting base. However, when the preventing means releases the safety plug unit, the switch operating means opens the switching means to open the power supply circuit. Accordingly, whenever the safety plug unit is removed, the power supply from the power supply output section to vehicle electrical loads including an electric motor and so forth is inevitably stopped.

Thus, any wrong use such that the safety plug unit is removed while high voltage current flows to the vehicle electrical loads from the power supply output section can be avoided. As a result, damages of equipment and wirings made by large surge voltage, erroneous operations of the equipment made by generation of large noises, or the like can be prevented. The safety is further improved, accordingly.

A further preferred feature of the present teaching is that the removal preventing means includes a cover for selectively moving between an open position and a close position to cover the safety plug unit in the close position, and the switch operating means operates in response to the open/close position conditions of the cover, and keeps the switching means under an open condition when the cover is under the open position condition.

According to this feature, when a user removes the safety plug unit, the user needs to move the cover to the close position. Thus, with the movement of the cover to the close position, the switching means inevitably opens the power supply circuit. A simple and definite linkage to the switching operation thus can be obtained.

Alternatively, for example, the power supply device can include a relay that selectively opens and closes the power supply circuit and open/close position condition detecting means for detecting an open/close condition of the cover. When the open/close position condition detecting means detects the open condition of the cover, the relay operates to open the power supply circuit.

A further preferred feature of the present teaching is that the power supply device further includes a breaker disposed in a power supply circuit for protecting the power supply circuit from an excessive current.

According to this feature, even if any excessive current consumption or an accident of short circuit occurs between the power supply device and the vehicle electrical loads, the breaker disconnects the power supply circuit to ensure the safety.

A further preferred feature of the present teaching is that a fuse is disposed in the safety plug unit to be connected to the series circuit of the battery in series.

According to this feature, even if any accident of short circuit occurs in the power supply device, excessive current can be intercepted. For example, even if the breaker is provided, the breaker is not able to cope with an accident of short circuit which occurs at a location closer to the power source than the breaker or with malfunction of the breaker itself. According to this invention, however, such excessive current can be surely intercepted under the circumstances.

A further preferred feature of the present teaching is that the fuse is positioned on a reverse side of the safety plug unit, and the fuse is not allowed to be exchanged under a condition that the safety plug unit is coupled with the plug unit connecting base.

According to this feature, the safety plug unit needs to be removed when exchange work of the fuse is made. In addition, the fuse is positioned inside of the safety plug unit that is removed. Hence, there is no risk of electric shock at all in the exchange service of the fuses and safety is ensured.

A further preferred feature of the present teaching is that the power supply device is disposed above a rear wheel of a hybrid type motorcycle to function as the power supply device for the motorcycle that runs with power generated by a combination of an internal combustion engine and an electric motor.

According to this feature, the safety in maintenance or inspection services of the power supply device for the hybrid type motorcycle can be improved. Because of the downsizing, the power supply device can be disposed above the rear wheel, and drive devices including an engine and an electric motor can be disposed in a center portion of a vehicle body (between a front wheel and the rear wheel).

The description further discloses, in order to ensure safety of a high voltage power supply device and to downsize the device, a preferred power supply device having a plurality of battery modules B, in which all of the battery modules B are connected to each other in series by coupling a safety plug unit 60 to a safety plug unit connecting base 40 to output a series voltage thereof from a power supply output coupler 90, the safety plug unit 60 makes connection/disconnection between electrode terminals BT of all the battery modules B, and female electrode bodies 4T electrically connected to power supply terminals BT of the respective battery modules B are collectively positioned in a limited area and are arranged at equal intervals on the safety plug unit connecting base 40. Also, an output voltage of each battery module B is set to be lower than 50V that is safe.

The description further discloses, according to a preferred first aspect, an embodiment of a power supply device for an electric vehicle which comprises: a plurality of batteries; a buttery containing box for containing the plurality of batteries; a safety plug unit connecting base having a plurality of plug connective plus electrodes each electrically connected to a plus terminal of the respective battery through a wiring and a plurality of plug connective minus electrodes each electrically connected to a minus terminal of the respective battery through a wiring, the plug connective plus electrodes and the plug connective minus electrodes being disposed out of the battery containing box; a safety plug unit having coupling electrodes that are removably coupled with the safety plug unit connecting base and that, while being coupled therewith, electrically connect the plug connective plus electrodes and the plug connective minus electrodes, and by coupling the safety plug unit with the safety plug unit connecting base, the respective batteries being connected to each other in series to output a series voltage from a power supply output section, wherein the plug connective plus electrodes and the plug connective minus electrodes are disposed in such a manner that all of the plus terminals and all of the minus terminals which function as series connective terminals between the batteries are connected to each other through wirings, and the safety plug unit cuts off all of the series connections between the batteries when the safety plug unit is removed from the safety plug unit connecting base.

Further, according to a preferred second aspect, the safety plug unit connecting base is a base in which the plug connective plus electrodes and the plug connective minus electrodes are collectively positioned in a limited area and are arranged generally at equal intervals in a plane.

Further, according to a preferred third aspect, each one of the batteries contains a plurality of cells connected to each other in series as a package, and an output voltage therefrom is greater than 12V and less than 50V.

Further, according to a preferred fourth aspect, the power supply device further comprises: switching means disposed in a power supply line for selectively opening and closing the power supply circuit; removal preventing means for mechanically preventing the safety plug unit from being removed from the safety plug unit connecting base; and switch operating means for keeping the switching means under an open condition thereof when the removal preventing means releases the safety plug unit.

Further, according to a preferred fifth aspect, the removal preventing means includes a cover for selectively moving between an open position and a close position to cover the safety plug unit in the close position, and the switch operating means operates in response to the open/close position conditions of the cover, and keeps the switching means under an open condition when the cover is under the open position condition.

Further, according to a preferred sixth aspect, the power supply device further comprises: a breaker disposed in a power supply circuit for protecting the power supply circuit from an excessive current.

Further, according to a preferred seventh aspect, a fuse is disposed in the safety plug unit to be connected to the series circuit of the battery in series.

Further, according to a preferred eighth aspect, the fuse is positioned on a reverse side of the safety plug unit, and the fuse is not allowed to be exchanged under a condition that the safety plug unit is coupled with the plug unit connecting base.

Further, according to a preferred ninth aspect, the power supply device is disposed above a rear wheel of a hybrid type motorcycle to function as the power supply device for the motorcycle that runs with power generated by a combination of an internal combustion engine and an electric motor.

## Claims

1. Power supply device for an electric vehicle comprising at least two batteries and/or battery modules, and comprising a safety plug device (50) having a safety plug unit connecting base (40) and a safety plug unit (60), wherein each battery and/or battery module is individually electrically connected to the safety plug unit connecting base (40), and wherein the batteries and/or battery modules are connected to each other in series by coupling the safety plug unit (60) to the safety plug unit connecting base (60) to output a series voltage of the batteries and/or battery modules.

2. Power supply device according to claim 1, further comprising a plurality of batteries and/or battery modules, and a battery containing box for containing the plurality of batteries and/or battery modules.

3. Power supply device according to claim 1 or 2, wherein the safety plug unit connecting base comprises a plurality of plug connective plus electrodes each electrically connected to a plus terminal of the respective battery or battery module through a wiring and a plurality of plug connective minus electrodes each electrically connected to a minus terminal of the respective battery or battery module through a wiring, the plug connective plus electrodes and the plug connective minus electrodes being disposed out of the battery containing box.

4. Power supply device according to claim 3, wherein the safety plug unit comprises coupling electrodes that are removably coupled with the safety plug unit connecting base and wherein, while being coupled therewith, electrically connecting the plug connective plus electrodes and the plug connective minus electrodes, such that by coupling the safety plug unit with the safety plug unit connecting base, the respective batteries and/or battery modules are connected to each other in series to output a series voltage from a power supply output section.

5. Power supply device according to claim 3 or 4, wherein the plug connective plus electrodes and the plug connective minus electrodes are disposed in such a manner that all of the plus terminals and all of the minus terminals which function as series connective terminals between the batteries and/or battery modules are connected to each other through wirings.

6. Power supply device according to one of the claims 1 to 5, wherein the safety plug unit cuts off all of the series connections between the batteries and/or battery modules when the safety plug unit is removed from the safety plug unit connecting base.

7. Power supply device according to one of the claims 3 to 6, wherein the safety plug unit connecting base is a base in which the plug connective plus electrodes and the plug connective minus electrodes are collectively positioned in a limited area and are arranged generally at equal intervals in a plane.

8. Power supply device according to one of the claims 1 to 7, wherein each one of the batteries and/or battery modules contains a plurality of cells connected to each other in series as a package, and an output voltage therefrom is greater than 12V and less than 50V.

9. Power supply device according to one of the claims 1 to 8, further comprising switching means disposed in a power supply line for selectively opening and closing the power supply circuit; removal preventing means for mechanically preventing the safety plug unit from being removed from the safety plug unit connecting base; and switch operating means for keeping the switching means under an open condition thereof when the removal preventing means releases the safety plug unit.

10. Power supply device according to claim 9, wherein the removal preventing means includes a cover for selectively moving between an open position and a close position to cover the safety plug unit in the close position, and the switch operating means operates in response to the open/close position conditions of the cover, and keeps the switching means under an open condition when the cover is under the open position condition.

11. Power supply device according to one of the claims 1 to 10, further comprising a breaker disposed in a power supply circuit for protecting the power supply circuit from an excessive current.

12. Power supply device according to one of the claims 1 to 11, wherein a fuse is disposed in the safety plug unit to be connected to the series circuit of the battery in series.

13. Power supply device according to claim 12, wherein the fuse is positioned on a reverse side of the safety plug unit, and the fuse is not allowed to be exchanged under a condition that the safety plug unit is coupled with the plug unit connecting base.

14. Power supply device according to one of the claims 1 to 13, wherein the power supply device is disposed above a rear wheel of a hybrid type motorcycle to function as the power supply device for the motorcycle that runs with power generated by a combination of an internal combustion engine and an electric motor.
